# EUROPEAN PATENT SPECIFICATION

(11) **EP 0 701 946 B1**
(45) Date of publication and mention of the grant of the patent: **10.02.1999**
(21) Application number: 95306318.7
(22) Date of filing: 08.09.1995
(51) Int. Cl.: B65D 6/36

(54) **Edge member for a sheet metal**
Randelement für ein Metallblech
Elément de bordure pour tôle

(30) Priority: 14.09.1994 GB 9418501
(43) Date of publication of application: 20.03.1996
(73) Proprietor: EGBERT H TAYLOR & COMPANY LIMITED, Hartlebury, Worcestershire DY10 4JB (GB)
(72) Inventor: Taylor, Alden Egbert Fenton, Kidderminster, Worcestershire DY10 1TE (GB)
(74) Representative: Chettle, Adrian John

(56) References cited:
- CH-A- 200 625
- FR-A- 2 493 470
- NL-C- 15 459
- US-A- 3 937 356

## Description

The present invention relates to an edge member for sheet metal, and particularly, but not exclusively, to a rim protector and stiffener for a container fabricated from sheet metal (see for example FR-A-2 493 470).

Sheet metal is a versatile material which can be formed by pressing or otherwise into many different shapes. However, sheet metal has the disadvantage, that the edge of the sheet may be sharp and thus constitute a hazard to safety. Furthermore the edge of the sheet may require reinforcement to counter the effect of side loads applied thereto.

It is therefore known in the art to protect sheet metal edges in order to render them both safe and relatively stiff. One simple technique is to bend the edge of a sheet metal member over onto itself, thus providing a blunt edge at least double the thickness of the sheet; such a technique gives a stiffer edge, but it is a technique which is extremely difficult to perform on edges which are not straight. The edge may alternatively be rolled over to form a generally circular hollow section but again the technique is very difficult to perform on edges which are not straight.

A further technique is to use an edge member comprising a cylindrical tube, which has a single longitudinal split. For non-straight edges, the split tube may be bent to the required shape, and fitted over the edge of the sheet metal, thus forming a rim protector. However, bending of a split tube generally leads to distortion and kinking of the tube, and especially opening and closing of the split in the region of bends; thus much care needs to be taken during bending, and fitting of the tube to the edge may be rather time consuming. Welding of the tube to the metal edge is also necessary if the split tube is to stiffen the edge, and moreover the tube must be welded on both sides at frequent intervals in order to be securely attached and to be safe.

It has also been found that a split tube has insufficient inherent rigidity to reduce or eliminate distortion of the sheet metal in the edge region, and accordingly the split tube tends to follow and reinforce such distortions rather than exerting a corrective influence.

The split tube method also has the disadvantage that the tube is not sealed and thus may constitute a corrosion trap. Furthermore the tube may cause difficulties if the metal container is of steel and is to be galvanised, since the galvanising fluid must be allowed to drain from inside the tube after dipping, and adequate drain apertures must be provided.

The split tube method gives adequate protection and stiffening to the metal edge but split tube is itself rather expensive, assembly of the tube and edge is difficult and the finished assembly is neither neat nor aesthetically pleasing.

An object of the present invention is to provide an improved edge member for a sheet metal edge which is not straight, which member is easy and inexpensive to fit and which results in a finished article which is strong and aesthetically pleasing.

According to a first aspect of the invention there is provided an edge member for a sheet metal edge, the member comprising a metal tube having a continuous cross-section and an indentation along the length thereof, the indentation being adapted to receive a sheet metal edge. In a preferred embodiment the edge member is of steel and is for attachment to the edge of a steel component.

Such an edge member provides aesthetically pleasing protection to an exposed edge whilst substantially stiffening and strengthening the edge against loads applied thereto.

In a preferred embodiment, the edge member is reflectively symmetrical about a plane including the longitudinal axis of the tube.

Preferably the indentation extends through the longitudinal centreline of the tube; the indentation may extend substantially to the opposite inner side of the wall of the tube.

Preferably the indentation is sized in order to receive an edge of a sheet member tightly. In a preferred embodiment the indentation has substantially parallel sides over a portion thereof; such a construction ensures good location of the edge member on the metal edge and can render welding clamps unnecessary. Preferably the indentation has a bell mouth to ensure that the edge member is self-locating.

It has been found that the edge member according to the invention has sufficient inherent rigidity to correct or eliminate distortion in the edge region of the sheet metal.

In a preferred embodiment, the edge member comprises a rim protector for the rim of a steel container, wherein the protector is a closed ring adapted to protect a substantially continuous edge of a container opening.

According to a second aspect, the invention provides a method of manufacturing an edge member for a sheet metal edge, the method including the steps of:
conforming a length of metal tube having a continuous cross section to a shape corresponding to the shape of an edge to be protected; and
pressing an indentation into the wall of the tube along the length thereof.

Such an edge member has the advantage that it may be used as a guide for correct alignment of sheet metal parts to be engaged therewith in use, and particularly as a guide for assembly of parts of a sheet steel container. Such an edge member may also locate the sheet metal parts tightly and thus provided a stiffened location for subsequent fixing, for example by welding.

The ends of the tube may be fixed together by any suitable means which permit indentation, and may for example be welded together to form a continuous edge member.

An embodiment of the invention will now be described by way of example only and with reference to the accompanying drawings in which:
Fig. 1 is a plan of an edge member according to the invention;
Fig. 2 is a side elevation of the edge member of Fig. 1;
Fig. 3 is an enlarged cross-section on line 3 - 3 of Fig. 1; and
Fig. 4 is a perspective view of the carcass of a refuse container fitted with the rim protector of Figs. 1-3.

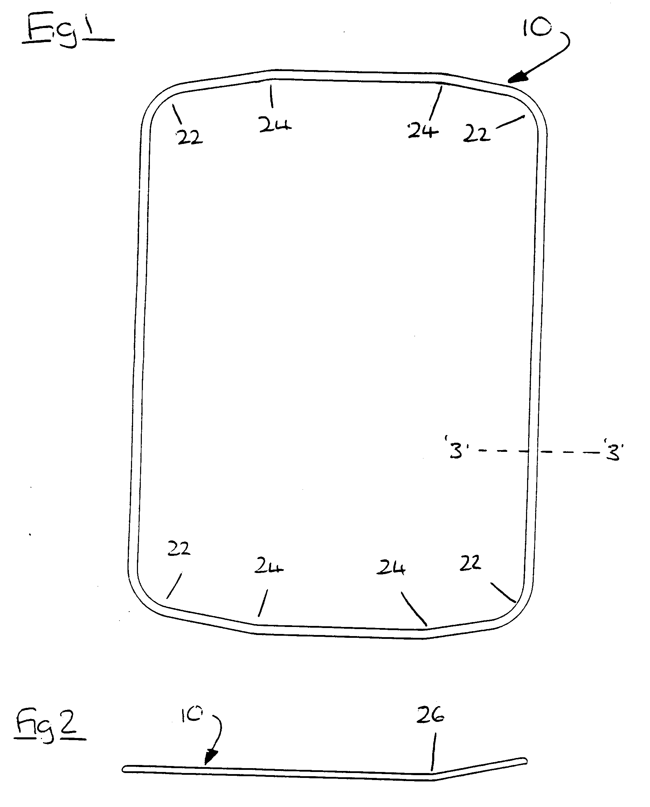

Figs. 1-3 of the drawings illustrate an edge member 10 for the carcass of a steel refuse container. The edge member 10 comprises a closed ring of steel tube 12 having bends 22,24,26 formed in any suitable manner to conform to the edge to be protected. Figs. 1 and 2 illustrate that the tube bends can be provided in two mutually perpendicular planes.

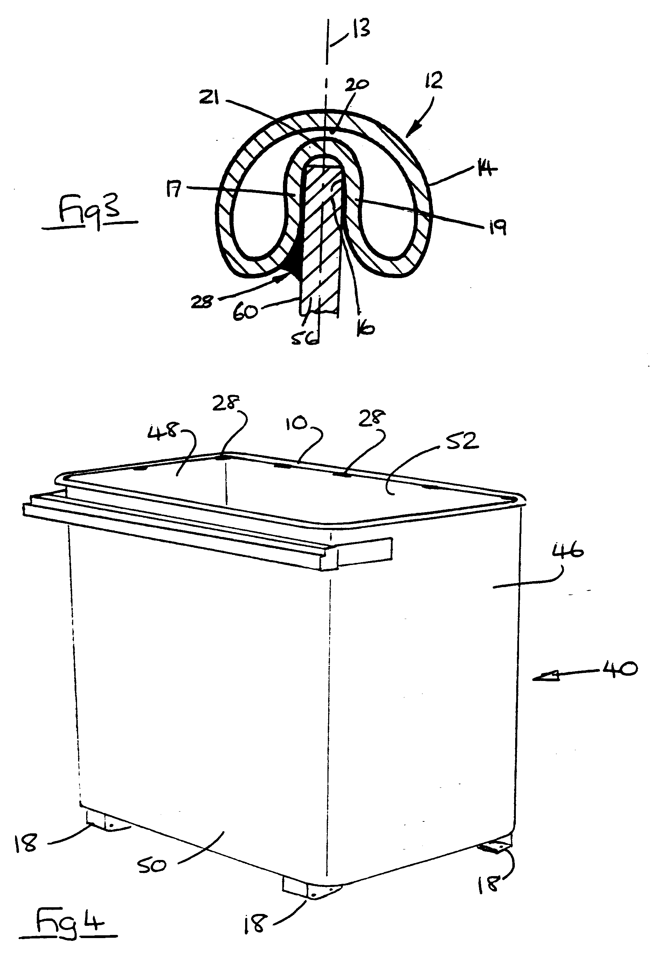

The cross-section of the tube 12 (Fig. 3) is generally circular with a continuous indentation 16 extending from one side. The tube is reflectively symmetrical about the middle of the indentation, and the indentation extends almost to the opposite convex portion 14 of the tube as illustrated.

The sidewalls 17,19 of the indentation are substantially parallel and are joined at their inner ends by a concave end portion 21. The outer ends of the sidewalls 17,19 blend into the convex portion 14 of the tube.

The width of the indentation is designed to tightly receive the edge of a sheet steel member as will be described in greater detail below.

The edge member is manufactured from circular metal tube stock of around 20 mm external diameter into which bends 22,24,26 are introduced by any suitable method, taking care to avoid distortion and kinking.

After bending, the abutting ends of the tube are joined by e.g. welding to form a closed ring. Alternatively the ends may be left free.

The bent tube is subsequently placed in a close fitting die and the indentation pressed in. The use of a die avoids distortion and ensures precision of the final profile. In the alternative the tube can be closed by welding after the indentation has been pressed in, or the ends can be connected by a close-fitting double ended plug of suitable cross-section.

Closing of the tube ends is preferred if the container is to be galvanised since a corrosion trap is thereby avoided, and galvanising fluid cannot enter the tube interior.

Fig. 4 illustrates the carcass of a steel waste container 40 to which wheels are mounted on flanges 18. The container comprises an assembly of preformed panels which may include a front 50, a rear 52 and two side walls 46,48. The preformed panels are continuously welded at their upright abutting edges to form the container.

The upper edges of the container opening constitute the safety hazard which is eliminated by the present invention. The edge member 10 is simply placed over the exposed edge and secured by a series of tack welds 28 on the inner side, as illustrated in Fig. 3. Welding on the exterior side is unnecessary since the cross-section of the edge member is continuous, moreover fewer tack welds are required than is the case for a split tube edge protector.

The indentation is preferably a reasonably tight fit on the container edge so as to avoid the need for clamps during welding.

The edge member of the invention may be used as part of an assembly jig to hold the preformed panels 46,48,50,52 during welding thereof.

Preferably the edge member is sufficiently tight to require gentle tapping onto the container edge, and in this condition the sidewalls 17,19 have sufficient resilience to receive and grip the edge. The radiused mouth of the indentation ensures that the edge member is self-locating.

As indicated in Fig. 3, the edge member is pushed onto the sheet metal edge as far as possible in order to maximise the stiffening and straightening effect thereof. In practice the gap between the sheet metal edge and the inner portion of the edge member may be insignificant, or the adjacent surfaces may be shaped to closely conform.

## Claims

1. An edge member for a sheet metal edge, the member comprising a metal tube having a continuous cross section and an indentation along the length thereof, the indentation being adapted to receive in use a sheet metal edge.

2. An edge member according to claim 1 wherein the indentation is continuous.

3. An edge member according to claim 1 or claim 2 wherein the indentation extends through the centreline of the tube.

4. An edge member according to claim 3 wherein the indentation extends substantially to the opposite side of the tube.

5. An edge member according to any preceding claim wherein the indentation has substantially parallel sides.

6. An edge member according to any preceding claim wherein the indentation has a flared mouth.

7. An edge member according to any preceding claim and of steel.

8. An edge member according to any preceding claim wherein the tube is substantially symmetrical about the indentation.

9. An edge member according to any preceding claim and formed into a closed ring, the plane of the ring being substantially perpendicular to the direction of said indentation.

10. An edge member according to claim 10 wherein the ends thereof are fixed together against relative movement.

11. A method of manufacturing an edge member for a sheet metal edge, the method including the steps of:
conforming a length of metal tube having a continuous cross section to a shape corresponding to the shape of an edge to be protected; and
pressing a continuous identation into the wall of the tube along the length thereof to receive said edge.

## Patentansprüche

1. Ein Kantenumfassungsteil oder -profil (Kantenteil) für eine Metallblech-Kante, umfassend bzw. bestehend aus einem Metallrohr oder einer Hülse aus Metall mit kontinuierlichem bzw. in sich geschlossenem Querschnitt und einer Einwölbung oder Einstülpung oder Einkerbung in Längsrichtung, wobei die Einwölbung, Einstülpung oder Einkerbung angepasst oder geformt ist zur Aufnahme einer Metallblech-Kante bzw. eines Randes eines Bleches oder Blechteils.

2. Kantenteil nach Anspruch 1, dadurch gekennzeichnet, dass die Einwölbung kontinuierlich, stetig ist.

3. Kantenteil nach Anspruch 1 oder 2, dadurch gekennzeichnet, dass sich die Einwölbung längs oder durch die zentrale Mittellinie des Rohres oder der Hülse erstreckt.

4. Ein Kantenteil gemäss Anspruch 3, wobei sich die Einwölbung im Wesentlichen bis zur gegenüberliegenden Seite des Rohres bzw. der Hülse erstreckt.

5. Ein Kantenteil nach einem der vorhergehenden Ansprüche, wobei die Einwölbung im Wesentlichen parallele Seiten aufweist.

6. Ein Kantenteil nach einem der vorhergehenden Ansprüche, wobei die Einwölbung eine sich verbreiternde Mündungsöffnung hat.

7. Ein Kantenteil gemäss irgendeinem der vorhergehenden Ansprüche, bestehend aus Stahl.

8. Ein Kantenteil nach irgendeinem der vorhergehenden Ansprüche, wobei das Rohr oder die Hülse im Wesentlichen symmetrisch bezüglich der Einstülpung oder Einwölbung ist.

9. Ein Kantenteil gemäss irgendeinem der vorhergehenden Ansprüche und geformt als oder in einem in sich geschlossenen Ring, wobei sich die Ebene oder Fläche dieses Ringes im Wesentlichen senkrecht zu der Richtung der Einwölbung oder Einstülpung erstreckt.

10. Ein Kantenteil gemäss Anspruch 10, wobei die gegeneinanderzu verlaufenden Enden miteinander fixiert oder verbunden sind gegen Relativbewegung.

11. Ein Verfahren zur Herstellung eines Kantengliedes für eine Metallblech-Kante oder einen Blechrand, umfassend folgende Verfahrensschritte:
Verformung einer Länge eines Metallrohres, welches einen kontinuierlichen bzw. in sich geschlossenen Querschnitt aufweist, in eine Gestalt, insbesondere Querschnittsform, entsprechend der Gestalt der zu schützenden Kante bzw. des zu schützenden Blechrandes; und
Einpressen einer kontinuierlichen, stetigen Einstülpung, Einwölbung oder Einrillung in die Wandung des Rohres in dessen Längsrichtung, zur Aufnahme des zu schützenden Blechrandes.

## Revendications

1. Elément de bordure pour arête de tôle métallique, l'élément comprenant
un tube métallique ayant une section transversale continue et un enfoncement creux suivant sa longueur, l'enfoncement creux étant destiné à recevoir, en cours d'utilisation, une arête de tôle métallique.

2. Elément de bordure selon la revendication 1,
dans lequel
l'enfoncement creux est continu.

3. Elément de bordure selon la revendication 1 ou la revendication 2,
dans lequel
l'enfoncement creux s'étend à travers l'axe central du tube.

4. Elément de bordure selon la revendication 3,
dans lequel
l'enfoncement creux s'étend essentiellement du côté opposé du tube.

5. Elément de bordure selon l'une quelconque des revendications précédentes,
dans lequel
l'enfoncement creux a des côtés essentiellement parallèles.

6. Elément de bordure selon l'une quelconque des revendications précédentes,
dans lequel
l'enfoncement creux a une embouchure évasée.

7. Elément de bordure selon l'une quelconque des revendications précédentes,
dans lequel
l'élément est en acier.

8. Elément de bordure selon l'une quelconque des revendications précédentes,
dans lequel
le tube est essentiellement symétrique autour de l'enfoncement creux.

9. Elément de bordure selon l'une quelconque des revendications précédentes,
dans lequel
on donne à l'élément la forme d'un anneau fermé, le plan de cet anneau étant essentiellement perpendiculaire à la direction de l'enfoncement creux.

10. Elément de bordure selon la revendication 9,
dans lequel
les extrémités de l'élément sont fixées l'une à l'autre pour empêcher tout mouvement relatif.

11. Procédé de fabrication d'un élément de bordure pour arête de tôle métallique,
comprenant les étapes consistant à :
• conformer une longueur de tube métallique ayant une section transversale continue, pour lui donner une forme correspondant à celle d'une arête de tôle à protéger ; et
• presser un enfoncement creux continu dans la paroi du tube, suivant la longueur de celui-ci, pour lui permettre de recevoir l'arête de tôle.
